(19) Europäisches Patentamt
European Patent Office
Office européen des brevets

(11) **EP 2 762 347 A1**

(12) **EUROPÄISCHE PATENTANMELDUNG**

(43) Veröffentlichungstag:
**06.08.2014 Patentblatt 2014/32**

(51) Int Cl.:
*B60L 7/10* (2006.01)   *H02M 7/66* (2006.01)
*H02M 7/797* (2006.01)

(21) Anmeldenummer: **13153502.3**

(22) Anmeldetag: **31.01.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Siemens Aktiengesellschaft**
**80333 München (DE)**

(72) Erfinder: **Hiller, Marc**
**91207 Lauf an der Pegnitz (DE)**

(54) **Modularer Hochfrequenz-Umrichter und Verfahren zum Betrieb desselben**

(57)    Es werden ein modularer Hochfrequenz-Umrichter (3) und ein Verfahren zu dessen Betrieb angegeben. Der Umrichter (3) umfasst mehrere Submodule (5a-5c), die eingangsseitig in Reihe über eine Induktivität (7) in einen aus einer Gleichspannungsquelle (4) gespeisten Versorgungsstromkreis (8) geschaltet sind. Jedes Submodul (5a-5c) weist eingangsseitig eine Halbbrücke (20) und ausgangsseitig eine mindestens einphasige Vollbrücke (21) auf. Die Halbbrücke (20) und die Vollbrücke (21) sind in jedem Submodul (5a-5c) jeweils zusammen mit einer Zwischenkreiskapazität (22) in einem Gleichspannungs-Zwischenkreis (25) parallelgeschaltet. Verfahrensgemäß werden die Submodule (5a-5c) im Wechsel auf den Versorgungsstromkreis (8) aufgeschaltet, indem die Zwischenkreiskapazität (22) des jeweils aufgeschalteten Submoduls (5a-5c) mittels der eingangsseitigen Halbbrücke (20) in den Versorgungsstromkreis (8) geschaltet wird. Dabei wird die über der jeweiligen Zwischenkreiskapazität (22) eines jeden Submoduls (5a-5c) abfallende Zwischenkreisspannung ($U_{Z1}$-$U_{Z3}$) gemessen. Das oder jedes aufzuschaltende Submodul (5a-5c) wird nach Maßgabe der Spannungsabweichung der zugehörigen Zwischenkreisspannung ($U_{Z1}$-$U_{Z3}$) von einem vorgegebenen Spannungssollwert ($U_{Z10}$-$U_{Z30}$) ausgewählt.

FIG 1

EP 2 762 347 A1

**Beschreibung**

Die Erfindung bezieht sich auf einen Modularen Hochfrequenz-Umrichter. Die Erfindung bezieht sich des Weiteren auf ein Verfahren zum Betrieb eines solchen.

Eine Umrichterschaltung der vorstehend genannten Art ist in der Veröffentlichung Lukas Lambertz et al., "Modularer Hochfrequenz Umrichter für Fahrzeugantriebe", EMA 2010, 08. - 09. September 2010, Aschaffenburg zur elektrischen Energieversorgung der Motorwicklungen eines elektrischen Antriebsmotors in einem Fahrzeugantrieb offenbart.

Der bekannte Modulare Hochfrequenz-Umrichter (kurz MHF-Umrichter) ist zum Umwandeln einer Gleichspannung aus einer Traktionsbatterie des Fahrzeugs in mehrere Wechselspannungen vorgesehen. Die einzelnen Wechselspannungen werden dabei durch mehrere Submodule erzeugt, die in Reihe in den Versorgungsstromkreis der Traktionsbatterie geschaltet sind. Jedes Submodul ist dabei eingangsseitig über eine einphasige Halbbrücke mit dem Versorgungsstromkreis verbunden. Zur Erzeugung der Wechselspannung weist jedes Submodul ausgangsseitig eine einphasige Vollbrücke (H-Brücke) auf, die über einen Laststromkreis mit einer Phasenwicklung des Antriebsmotors des Fahrzeugs verschaltet ist. Submodulintern sind die eingangsseitige Halbbrücke und die Vollbrücke zusammen mit einer Zwischenkreiskapazität in einem (Gleichspannungs-)Zwischenkreis parallelgeschaltet.

Im Normalbetrieb (Antriebsmodus) des MHF-Umrichters, in dem über die Submodule des Umrichters elektrische Leistung aus dem Versorgungsstromkreis in den jeweiligen Laststromkreis transportiert wird, werden die Eingangshalbbrücken der Submodule in Zusammenwirkung mit einer im Versorgungsstromkreis angeordneten Induktivität als Hochsetzsteller betrieben. Hierzu werden üblicherweise die Submodule in regelmäßig alternierendem Wechsel auf den Versorgungsstromkreis aufgeschaltet. Die eingangsseitigen Halbbrücken werden zu diesem Zweck üblicherweise mit periodischen Trägersignalen angesteuert, die um gleiche Phasenwinkel versetzt sind. Infolge dieser Ansteuerung wird die Zwischenkreiskapazität des jeweils aufgeschalteten Submoduls für die Dauer eines Aufschaltpulses in den Versorgungsstromkreis geschaltet.

Zusätzlich zu dem Antriebsmodus können die eingangsseitigen Halbbrücken der Submodule in einem Rückspeisemodus betrieben werden, in dem elektrische Leistung aus dem Laststromkreis über das jeweils zugehörige Submodul in den Versorgungsstromkreis zurückgespeist wird. Die eingangsseitigen Halbbrücken der Submodule werden hierzu als Tiefsetzsteller betrieben.

Die Zwischenkreisspannungen der Submodule werden für jedes Submodul individuell durch Variation der Dauer des jeweiligen Aufschaltpulses geregelt.

Der Erfindung liegt die Aufgabe zugrunde, einen MHF-Umrichter und ein Verfahren zu dessen Betrieb zu verbessern.

Bezüglich des Verfahrens wird diese Aufgabe erfindungsgemäß gelöst durch die Merkmale des Anspruchs 1. Bezüglich des MHF-Umrichters wird die Aufgabe erfindungsgemäß gelöst durch die Merkmale des Anspruchs 9. Vorteilhafte und teils für sich gesehen erfinderische Ausgestaltungsformen und Weiterentwicklungen der Erfindung sind in den Unteransprüchen und der nachfolgenden Beschreibung dargelegt.

Die Erfindung geht aus von einem MHF-Umrichter, der mehrere Submodule umfasst. Die Submodule werden hierbei bestimmungsgemäß eingangsseitig in Reihe über eine Induktivität in einen aus einer Gleichspannungsquelle gespeisten Versorgungsstromkreis geschaltet. Jedes Submodul weist eingangsseitig eine Halbbrücke (nachfolgend Eingangsbrücke) auf, mit der das Submodul in den Versorgungsstromkreis geschaltet ist. Ausgangsseitig weist jedes Submodul eine mindestens einphasige Vollbrücke (nachfolgend Ausgangsbrücke) auf, mit der das Submodul über einen Laststromkreis mit einer anzusteuernden Last verbunden ist. Jedes Submodul weist des Weiteren einen (Gleichspannungs-)Zwischenkreis auf, in welchem die Eingangsbrücke und die Ausgangsbrücke parallelgeschaltet sind. In den Zwischenkreis ist zudem - in Parallelschaltung zu der Eingangsbrücke und der Ausgangsbrücke - eine Zwischenkreiskapazität geschaltet.

Der MHF-Umrichter ist insbesondere zum Einsatz in dem Fahrzeugantrieb eines Elektrofahrzeugs vorgesehen. Als Gleichstromquelle für den Versorgungsstromkreis ist in diesem Anwendungsfall die Traktionsbatterie (Hochvoltbatterie) des Fahrzeugs vorgesehen. Bei der an das Submodul ausgangsseitig anzuschließenden Last handelt es sich hier insbesondere um einen Elektromotor oder um eine Phasenwicklung eines solchen. Vorzugsweise ist dabei jeder Phasenwicklung des Elektromotors ein eigenes Submodul zugeordnet. Alternativ hierzu können im Rahmen der Erfindung allerdings mehrere Phasenwicklungen eines mehrphasigen Elektromotors an ein gemeinsames Submodul angeschlossen werden. Die Ausgangsbrücke ist in diesem Fall durch eine entsprechend mehrphasige Vollbrücke gebildet. In einem speziellen Anwendungsfall der Erfindung können mehrere Elektromotoren - die beispielsweise zum jeweils selektiven Antrieb verschiedener Räder des Fahrzeugs dienen - parallel zueinander durch verschiedene Submodule des MHF-Umrichters angesteuert werden. Die Zwischenkreiskapazität eines jeden Submoduls ist jeweils insbesondere durch einen oder mehrere Kondensatoren gebildet.

Im Zuge des Verfahrens werden die Zwischenkreiskapazitäten der Submodule im Wechsel mittels der jeweils zugeordneten Eingangsbrücke in den Versorgungsstromkreis geschaltet. Die Schaltung der Zwischenkreiskapazität eines Submoduls in den Versorgungsstromkreis ist nachfolgend abkürzend als "Aufschaltung" des jeweiligen Submoduls auf den Versorgungsstromkreis bezeichnet. Das oder jedes Submodul, dessen Zwischenkreiskapazität in den Versorgungsstromkreis geschaltet wird, ist nachfolgend als "aufgeschaltetes Submodul" bezeichnet. In der Regel sind zu jedem Zeitpunkt stets mehrere Submodule gleichzeitig auf den Versorgungsstromkreis aufgeschaltet.

Verfahrensgemäß wird nun die über der jeweiligen Zwischenkreiskapazität eines jeden Submoduls abfallende Zwischenkreisspannung gemessen. Das oder jedes aufzuschaltende Submodul wird dabei erfindungsgemäß nach Maßgabe der Spannungsabweichung der zugehörigen Zwischenkreisspannung von einem vorgegebenen Spannungssollwert ausgewählt. Insbesondere werden in bevorzugter Ausführung des Verfahrens stets zumindest dasjenige Submodul mit der maximalen Spannungsabweichung (insbesondere mit der größten positiven Spannungsabweichung) oder zumindest dasjenige Submodul mit der minimalen Spannungsabweichung (insbesondere mit der größten negativen Spannungsabweichung) auf den Versorgungsstromkreis aufgeschaltet. Die Spannungsabweichung wird dabei als positiv gewertet, wenn die gemessene Zwischenkreisspannung den Spannungssollwert überschreitet. Die Spannungsabweichung wird entsprechend als negativ gewertet, wenn die gemessene Zwischenkreisspannung den Spannungssollwert unterschreitet.

Durch die Auswahl der aufzuschaltenden Submodule nach Maßgabe der Spannungsabweichung der jeweiligen Zwischenkreisspannung kann auf besonders einfache, aber effektive Weise eine Vergleichmäßigung des Leistungsflusses in dem Versorgungskreis erzielt werden. Zudem kann die Anzahl der Schaltprozesse der Eingangsbrücken reduziert werden. Die Belastung der Umrichterkomponenten, insbesondere der Halbleiterschalter der Eingangsbrücken kann somit reduziert werden.

Das Verfahren ermöglicht dabei insbesondere, den Spannungssollwert für jedes Submodul individuell vorzugeben. Somit können die Submodule im Rahmen der Erfindung wahlweise auf gleiche oder unterschiedliche Zwischenkreisspannungen geregelt werden. Insbesondere für den letzteren Fall wird im Zuge des Verfahrens vorzugsweise die Spannungsabweichung für jedes Submodul durch Vergleich der jeweils gemessenen Zwischenkreisspannung mit dem zugehörigen Spannungssollwert explizit berechnet. Sofern allerdings für alle Submodule der Spannungssollwert einheitlich (und somit gleich) vorgegeben ist, wird die Spannungsabweichung vorzugsweise nicht explizit berechnet. Vielmehr werden in diesem Fall die Zwischenkreisspannungen unmittelbar miteinander verglichen, da sich der Unterschied der Spannungsabweichungen bei gleichen Spannungssollwerten erkanntermaßen direkt im Unterschied der gemessenen Zwischenkreisspannungen äußert.

In einer verfeinerten Verfahrensvariante wird zusätzlich zu den Zwischenkreisspannungen die Stromrichtung des in dem Versorgungsstromkreis fließenden Stroms bestimmt und bei der Auswahl des aufzuschaltenden Submoduls berücksichtigt. Dabei wird vorzugsweise stets zumindest dasjenige Submodul mit der minimalen (insbesondere größten negativen) Spannungsabweichung auf den Versorgungsstromkreis aufgeschaltet, wenn die Stromrichtung positiv ist. Bei negativer Stromrichtung wird dagegen stets zumindest dasjenige Submodul mit der maximalen (insbesondere größten positiven) Spannungsabweichung auf den Versorgungsstromkreis aufgeschaltet.

Als Stromfluss mit "positiver Stromrichtung" wird hierbei im Sinne der technischen Stromrichtungsdefinition ein von dem Plus-Pol auf den Minus-Pol der Gleichspannungsquelle gerichteter Stromfluss gewertet. Als "negativ" wird umgekehrt ein von dem Minus-Pol auf den Plus-Pol der Gleichspannungsquelle gerichteter Stromfluss gewertet.

Die Anpassung der Zwischenkreisspannungen wird somit bei der vorstehend beschriebenen Verfahrensvariante stromrichtungsabhängig sowohl durch aktive Ladung von teilentleerten Zwischenkreiskapazitäten als auch durch aktive Entladung von überladenen Zwischenkreiskapazitäten vorgenommen, und ist hierdurch besonders effektiv.

In zweckmäßiger Ausführung des Verfahrens wird die Eingangsbrücke des aufgeschalteten Submoduls mittels eines Eingangssteuersignals getaktet angesteuert. Das Eingangssteuersignal ist zweckmäßigerweise durch ein Pulssignal gebildet, das in jedem Taktzyklus vorgegebener Taktdauer jeweils einen Puls und eine Pulspause mit einstellbarem Aussteuergrad (auch als Puls-Pausen-Verhältnis oder Duty-Cycle bezeichnet) aufweist.

Die Variation des Aussteuergrades ermöglicht hierbei im Zuge des erfindungsgemäßen Verfahrens, nicht nur die einzelnen Zwischenkreisspannungen, sondern unabhängig hiervon auch den durch den Versorgungsstromkreis fließenden Strom (Versorgungsstrom) bedarfsgerecht zu regeln. Für die Spannungsregelung wird vorzugsweise die Summenspannung ermittelt, die durch die Summe der gemessenen Zwischenkreisspannungen aller Submodule gegeben ist. Aus der Abweichung dieser Summenspannung von der Summe der Spannungssollwerte wird dabei ein Stromsollwert für den Versorgungsstrom abgeleitet. Dieser Stromsollwert wird wiederum als Eingangsgröße für eine nachgeschaltete Stromregelung herangezogen. Im Zuge dieser Stromregelung wird der Versorgungsstrom durch Auf- und Abschalten von Submodulen, und somit durch Variation der über den Submodulen im Versorgungsstromstromkreis in Summe abfallenden Spannung (Effektivspannung) geregelt.

In einer einfach realisierbaren Verfahrensvariante wird für jeden Taktzyklus der Eingangssteuersignale das oder jedes aufzuschaltende Submodul nach Maßgabe der Spannungsabweichungen neu ausgewählt. Es wird also insbesondere für jeden Taktzyklus erneut - nach einer der vorstehend beschriebenen Ausgestaltungsformen des Verfahrens - zumindest dasjenige Submodul mit der maximalen (insbesondere größten positiven) oder minimalen (insbesondere größten negativen) Spannungsabweichung ermittelt auf den Versorgungsstromkreis aufgeschaltet.

In einer alternativen Verfahrensvariante wird der Wechsel zwischen den aufzuschaltenden Submodulen in Abhängigkeit der vorstehend eingeführten Effektivspannung vorgenommen, also in Abhängigkeit der Spannung, die in Summe über den Eingangskreisen der in Reihe geschalteten Submodule abfällt. Submodule werden dabei nur dann auf- oder abgeschaltet, wenn diese Effektivspannung - zu der nur die aufgeschalteten Submodule einen von Null verschiedenen Beitrag liefern - von einem vorgegebenen Sollwert um mehr als einen vorgegebenen Schaltwert abweicht. Dieser Schaltwert wird dabei in zweckmäßiger Ausgestaltung des Verfahrens variabel gewählt, so dass er der Hälfte (dem halben Betrag) der Zwischenkreisspannung des auf-oder abzuschaltenden Submoduls entspricht. Der Sollwert wird zweckmäßigerweise aus der von der vorstehend beschriebenen Stromregelung ausgegebenen Stellgröße abgeleitet.

In zweckmäßiger Ausgestaltung der Erfindung führt der MHF-Umrichter das erfindungsgemäße Verfahren automatisch durch. Er umfasst hierzu eine Steuereinrichtung, die schaltungs-und/oder programmtechnisch zur Durchführung des Verfahrens, insbesondere in einer der vorstehend beschriebenen Ausführungsvarianten eingerichtet ist. Die Steuereinrichtung umfasst dabei insbesondere einen Mikrocontroller, in dem ein das Verfahren in Betrieb des Umrichters automatisch durchführendes Steuerprogramm (Firmware) lauffähig implementiert ist. Alternativ oder zusätzlich kann die Steuereinrichtung im Rahmen der Erfindung allerdings auch mindestens einen nichtprogrammierbaren Hardware-Schaltkreis (z.B. einen ASIC) umfassen, in dem die Funktion zur automatischen Durchführung des Verfahrens oder eines Teils davon mit schaltungstechnischen Mitteln implementiert ist.

Die Steuereinrichtung kann im Rahmen der Erfindung durch eine einzige, alle Umrichtermodule gemeinsam ansteuernde (Zentral-) Steuereinheit gebildet sein, beispielsweise also durch einen einzigen Mikrocontroller. Alternativ oder zusätzlich hierzu kann die Steuereinrichtung im Rahmen der Erfindung aber auch ganz oder teilweise dezentral strukturiert sein, indem jedem Umrichtermodul (zumindest auch) eine eigene Steuereinheit zugeordnet ist.

Nachfolgend wird ein Ausführungsbeispiel der Erfindung anhand einer Zeichnung näher erläutert. Darin zeigen:

FIG 1     in einem schematisch vereinfachten elektronischen Schaltbild einen MHF-Umrichter mit drei in Reihe geschalteten Submodulen, wobei jedes der Submodule eine eingangsseitige Halbbrücke (Eingangsbrücke), eine ausgangsseitige einphasige Vollbrücke (Ausgangsbrücke) und einen (Gleichspannungs-)Zwischenkreis mit einer Zwischenkreiskapazität umfasst, sowie mit einer Steuereinheit zur Ansteuerung der Submodule,

FIG 2     in vergrößerter Darstellung eines der Submodule gemäß FIG 1,

FIG 3     in einem schematischen Blockschaltbild die Steuereinheit gemäß FIG 1,

FIG 4     in einem Flussdiagramm ein von einem Modulator der Steuereinheit zur Ansteuerung der Eingangsbrücken der Submodule durchgeführtes Verfahren, und

FIG 5     in Darstellung gemäß FIG 4 eine alternative Ausführungsform des Verfahrens.

Einander entsprechende Teile und Größen sind in allen Figuren stets mit gleichen Bezugszeichen versehen.

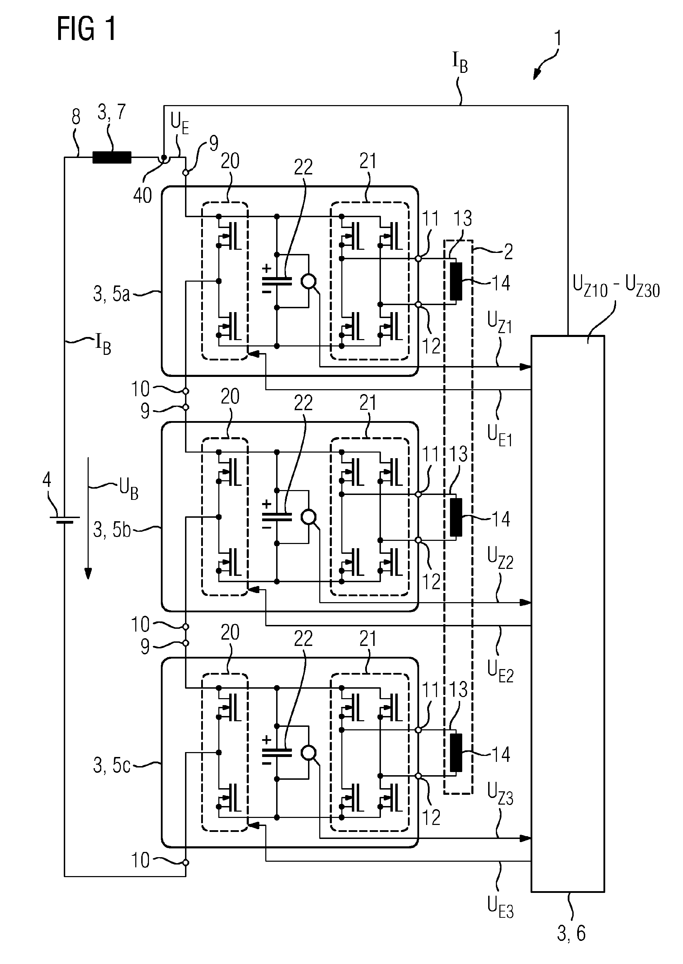

In FIG 1 ist ein Fahrzeugantrieb 1 für ein (nicht näher dargestelltes) Elektro-Fahrzeug dargestellt. Der Fahrzeugantrieb 1 umfasst als elektrische Last beispielhaft einen dreiphasigen elektrischen (Antriebs-)Motor 2 des Fahrzeugs.

Der Fahrzeugantrieb 1 umfasst des Weiteren einen (MHF-) Umrichter 3, der den Motor 2 mit elektrischer Leistung aus einer elektrischen Gleichspannungsquelle versorgt. Bei der Gleichspannungsquelle handelt es sich in dem dargestellten Beispiel um die (Traktions-)Batterie 4 (auch: Hochvoltbatterie) des Fahrzeugs.

Der Umrichter 3 umfasst im Beispiel gemäß FIG 1 drei Submodule 5a, 5b und 5c. Der Umrichter 3 umfasst zudem als Steuereinrichtung eine zentrale Steuereinheit 6 sowie ferner eine Induktivität 7.

Die Induktivität 7, die schaltungstechnisch insbesondere durch eine Spule realisiert ist, und die drei Submodule 5a-5c sind in Reihenschaltung über einen Versorgungsstromkreis (nachfolgend als Batteriestromkreis 8 bezeichnet) mit der Batterie 4 verbunden. Jedes Submodul 5a-5c ist hierbei mit zwei Eingangsklemmen 9 und 10 in den Batteriestromkreis 8 geschaltet.

Lastseitig ist jedes der Submodule 5a-5c jeweils über zwei Ausgangsklemmen 11 und 12 und einen Lastromkreis 13 an eine jeweils zugeordnete Phasenwicklung 14 des Motors 2 angeschlossen.

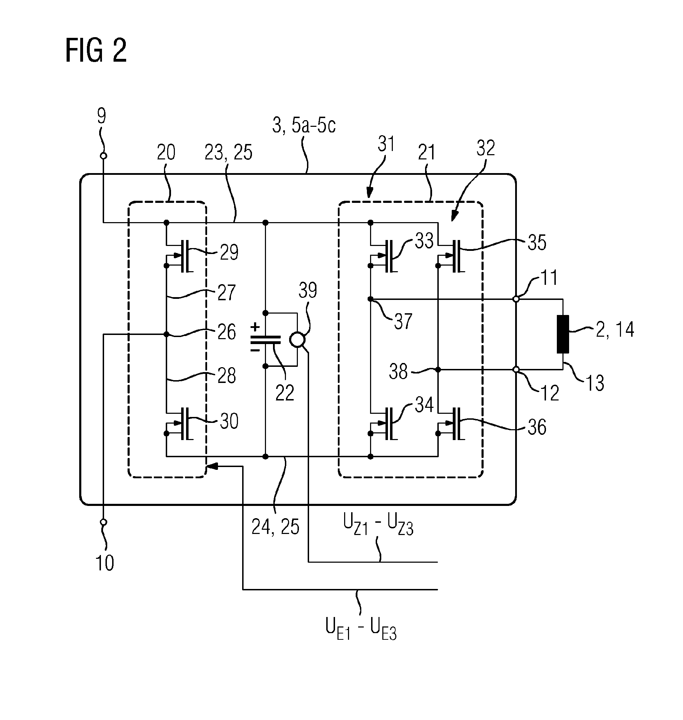

Eines der identisch aufgebauten Submodule 5a-5c ist in FIG 2 näher dargestellt. Wie dieser Darstellung zu entnehmen ist, weist jedes Submodul 5a-5c eingangsseitig eine nachfolgend als Eingangsbrücke 20 bezeichnete Halbbrücke sowie lastseitig eine nachfolgend als Ausgangsbrücke 21 bezeichnete, einphasige Vollbrücke (H-Brücke) auf. Jedes Submodul 5a-5c umfasst des Weiteren eine Zwischenkreiskapazität 22 in Form eines Kondensators, über der eine Kondensatorspannung $U_{Z1}$, $U_{Z2}$ bzw. $U_{Z3}$ abfällt. Die Eingangsbrücke 20, die Ausgangsbrücke 21 und die Zwischenkreiskapazität 22 sind hierbei parallel zueinander zwischen eine Plus-Schiene 23 und eine Minus-Schiene 24 eines (Gleichspannungs-)Zwischenkreises 25 geschaltet.

Die Eingangsbrücke 20 weist zwei durch einen Mittelabgriff 26 getrennte Zweige 27 und 28 auf, von denen sich der Zweig 27 zwischen dem Mittelabgriff 26 und der Plus-Schiene 23, und der Zweig 28 zwischen dem Mittelabgriff 26 und der Minus-Schiene 24 erstreckt. In jedem der Zweige 27, 28 ist je ein (Halbleiter-)Schalter 29 bzw. 30 angeordnet, der jeweils durch einen MOSFET gebildet ist. Die Eingangsklemmen 9 und 10 eines jeden Submoduls 5a-5c sind beidseitig des Schalters 29 mit der Plus-Schiene 23 bzw. mit dem Mittelabgriff 26 verschaltet.

Die Ausgangsbrücke 21 ist gebildet aus zwei Halbbrücken 31 und 32, die parallel zueinander zwischen die Plus-Schiene 23 und die Minus-Schiene 24 des Zwischenkreises 25 geschaltet sind. In jeder der beiden Halbbrücken 31, 32 sind wiederum zwei Halbleiterschalter 33 und 34 bzw. 35 und 36 angeordnet. Die Schalter 33-36 sind wiederum vorzugsweise durch MOSFETs gebildet.

Ein Mittelabgriff 37 zwischen den Halbleiterschaltern 33 und 34 der Halbbrücke 31 ist mit der Ausgangsklemme 11 verschaltet. Ein Mittelabgriff 38 zwischen den Halbleiterschaltern 35 und 36 der Halbbrücke 32 ist entsprechend mit der Ausgangsklemme 12 verschaltet.

Im Betrieb des Umrichters 3 wird durch die Batterie 4 über den Batteriestromkreis 8 eine Batteriespannung $U_B$ an den Umrichter 3 angelegt. Unter Wirkung der Batteriespannung $U_B$ fließt in dem Batteriestromkreis 8 ein Versorgungsstrom (Batteriestrom) mit einer Batteriestromstärke $I_B$.

In einem Antriebsmodus des Umrichters 3 werden die Submodule 5a-5c zur Speisung der Phasenwicklungen 14 des Motors 2 mit elektrischer Energie aus der Batterie 4 im Wechsel auf den Batteriestromkreis 8 aufgeschaltet. Hierzu wird der Halbleiterschalter 29 in der Eingangsbrücke 20 des jeweils aufzuschaltenden Submoduls 5a-5c geöffnet, so dass die Zwischenkreiskapazität 22 dieses Submoduls 5a-5c über die Eingangsklemmen 9 und 10 und den Halbleiterschalter 30 in den Batteriestromkreis 8 geschaltet ist. Im Regelfall werden auf diese Weise eine zeitlich wechselnde Anzahl von Submodulen 5a-5c aufgeschaltet. Das oder jedes übrige Submodul 5a-5c ist dagegen von dem Batteriestromkreis 4 abgeschaltet, indem die Eingangsklemmen 9 und 10 dieser Submodule 5a-5c durch den jeweils zugehörigen Halbleiterschalter 29 kurzgeschlossen sind. Bei positiver Stromflussrichtung des in dem Batteriestromkreis 8 fließenden Batteriestroms wird die Zwischenkreiskapazität 22 des jeweils aufgeschalteten Submoduls 5a-5c aus dem Batteriestromkreis 8 geladen, so dass die über der Zwischenkreiskapazität 22 abfallende Zwischenkreisspannung $U_{Z1}$-$U_{Z3}$ ansteigt.

Die Eingangsbrücke 20 des jeweils aufgeschalteten Submoduls 5a-5c wird dabei in Zusammenwirken mit der Induktivität 7 als Hochsetzsteller betrieben. Der Halbleiterschalter 29 wird hierzu in zeitlichem Wechsel, insbesondere mit einem vorgegebenen Aussteuergrad (Puls-Pausen-Verhältnis) getaktet, auf-und zugesteuert. Der zweite Halbleiterschalter 30 der Eingangsbrücke 20 wird vorzugsweise stets gegensätzlich zu dem Halbleiterschalter 29 geschaltet.

In einem Rückspeisemodus kann der Umrichter 3 alternativ auch zur Rückspeisung von elektrischer Energie in den Batteriestromkreis 8 herangezogen werden. Unter Erzeugung einer negativen Stromflussrichtung im Batteriestromkreis 8 werden die Eingangsbrücken 20 der Submodule 5a-5c hierbei als Tiefsetzsteller betrieben, indem der Halbleiterschalter 30 des jeweiligen Submoduls 5a-5c abwechselnd, insbesondere wiederum getaktet auf- und zugesteuert wird. Auch im Rückspeisemodus wird der Halbleiterschalter 29 dabei vorzugsweise stets gegensätzlich zu dem Halbleiterschalter 30 angesteuert.

Zur Ansteuerung der Halbleiterschalter 29 und 30 eines jeden Submoduls 5a-5c werden die Gate-Anschlüsse dieser Halbleiterschalter 29 und 30 von der Steuereinheit 6 jeweils mit einem Eingangssteuersignal $E_1$-$E_3$ belegt. In exemplarischer Definition handelt es sich bei den Eingangssteuersignalen $E_1$-$E_3$ jeweils um ein zwischen den Werten "0" und "1" schwankendes Pulssignal, wobei das jeweilige Submodul 5a-5c durch Ansteuerung mit dem Wert "0" abgeschaltet (Halbleiterschalter 29 geschlossen, Halbleiterschalter 30 geöffnet), und durch Ansteuerung mit dem Wert "1" aufgeschaltet (Halbleiterschalter 29 geöffnet, Halbleiterschalter 30 geschossen) wird. Die Steuereinheit 6 erhält im Gegenzug von den Submodulen 5a-5c als Eingangsgröße jeweils einen Messwert der Zwischenkreisspannung $U_{Z1}$-$U_{Z3}$. Die Zwischenkreisspannung $U_{Z1}$-$U_{Z3}$ wird hierzu in jedem Submodul 5a-5c jeweils mittels eines Messwandlers 39 (FIG 1) abgegriffen, der der Steuereinheit 6 ein zu der jeweiligen Zwischenkreisspannung $U_{Z1}$-$U_{Z3}$ proportionales Spannungssignal zuführt.

Als weitere Eingangsgröße erhält die Steuereinheit 6 einen Messwert der Batteriestromstärke $I_B$, der von einem Messwandler 40 (FIG 1) im Batteriestromkreis 8 abgegriffen und der Steuereinheit 6 beispielsweise in Form eines stromproportionalen Spannungssignals zugeführt wird.

Durch die Steuereinheit 6 werden die Zwischenkreisspannungen $U_{Z1}$-$U_{Z3}$ der Submodule 5a-5c auf einen jeweils zugeordneten Spannungssollwert $U_{Z10}$, $U_{Z20}$ bzw. $U_{Z30}$ geregelt. Die Spannungssollwerte $U_{Z10}$-$U_{Z30}$ sind dabei im allgemeinen Anwendungsfall des erfindungsgemäßen Umrichters 3 spezifisch für jedes Submodul 5a-5c vorgegeben und können entsprechend auch mit unterschiedlichem Betrag festgelegt sein. In dem einfachen Anwendungsfall gemäß FIG 1, bei dem die Submodule 5a-5c die gleich ausgelegten Phasenwicklungen 14 desselben Motors 2 betreiben, sind die Spannungssollwerte $U_{Z10}$-$U_{Z30}$ zweckmäßigerweise aber einheitlich auf den gleichen Betrag festgelegt ($U_{Z10}$ = $U_{Z20}$ = $U_{Z30}$). Zusätzlich zu der Regelung der Zwischenkreisspannungen $U_{Z1}$-$U_{Z3}$ regelt die Steuereinheit 6 auch die Batteriestromstärke $I_B$.

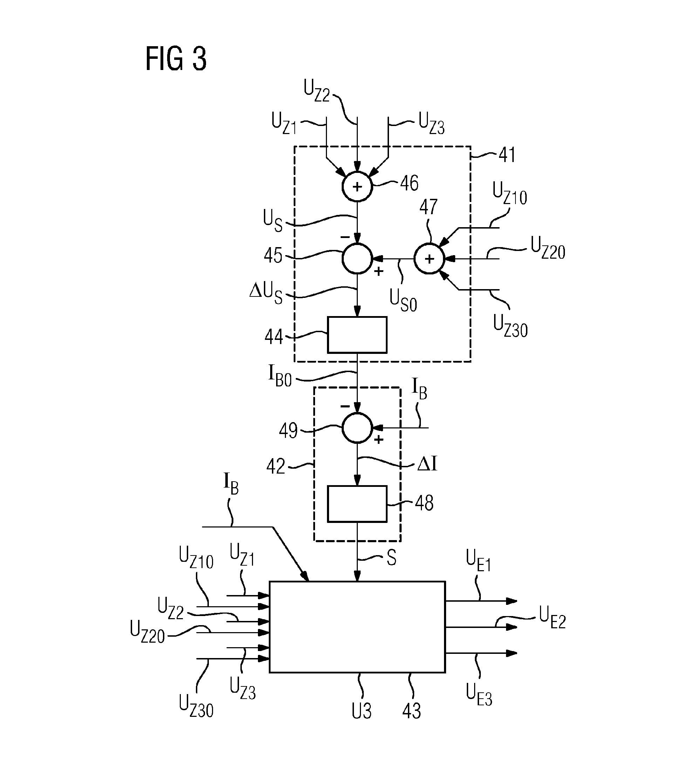

Zur Durchführung dieses Regelverfahrens umfasst die Steuereinheit 6 gemäß FIG 3 ein Spannungsregelmodul 41, ein diesem nachgeschaltetes Stromregelmodul 42 sowie einen dem Stromregelmodul 42 wiederum nachgeschalteten Modulator 43.

Das Spannungsregelmodul 41 ist wiederum gegliedert in einen Spannungsregler 44, ein diesem vorgeschaltetes Differenzglied 45 sowie zwei wiederum vorgeschaltete Summenglieder 46 und 47.

Dem Summenglied 46 sind hierbei die in den Submodulen 5a-5c erhobenen Messwerte der Zwischenkreisspannungen $U_{Z1}$-$U_{Z3}$ als Eingangsgrößen zugeführt. Das Summenglied 46 berechnet hieraus eine Summenspannung $U_S$ (mit $U_S = U_{Z1} + U_{Z2} + U_{Z3}$). In entsprechender Weise berechnet das Summenglied 47 aus den zugeführten Spannungssollwerten $U_{Z10}$-$U_{Z30}$ einen Summenspannungssollwert Uso (mit Uso = $U_{Z10} + U_{Z20} + U_{Z30}$). Sofern eine Änderung der Spannungssollwerte $U_{Z10}$-$U_{Z30}$ im Betrieb des Umrichters 3 nicht vorgesehen ist, kann das Summenglied 47 optional entfallen. Stattdessen ist in diesem Fall der Summenspannungssollwert $U_{S0}$ bevorzugt direkt als Konstante in der Steuereinheit 6 hinterlegt.

Das Differenzglied 45 berechnet durch Vergleich der Summenspannung $U_S$ mit dem Summenspannungssollwert $U_{S0}$ eine Summenspannungsabweichung $\Delta U_S$ (mit $\Delta U_S$ = Uso - $U_S$).

Die Summenspannungsabweichung $\Delta U_S$ wird als Führungsgröße dem - zweckmäßigerweise als Proportional-Integral-Regler (PI-Regler) ausgebildeten - Spannungsregler 44 zugeführt. In Abhängigkeit des Absolutwerts und zeitlichen Verlaufs der Summenspannungsabweichung $\Delta U_S$ bestimmt der Spannungsregler 44 einen Stromsollwert $I_{B0}$ und führt diesen als Eingangsgröße dem Stromregelmodul 42 zu.

Das Stromregelmodul 42 ist gegliedert in einen Stromregler 48 sowie ein vorgeschaltetes Differenzglied 49.

Das Differenzglied 49 ermittelt hierbei durch Vergleich des Messwertes der Batteriestromstärke $I_B$ mit dem Stromsollwert $I_{B0}$ eine Stromabweichung $\Delta I$ (mit $\Delta I$ = $I_{B0}$ - $I_B$), die dem - wiederum zweckmäßigerweise als PI-Regler ausgebildeten - Stromregler 48 als Führungsgröße zugeführt ist. Nach Maßgabe des Absolutwerts und zeitlichen Verlaufs der Stromabweichung $\Delta I$ berechnet der Stromregler 48 eine Stellgröße S, die dem Modulator 43 als Eingangsgröße zugeführt wird. Die Stellgröße S entspricht dabei derjenigen Spannung, die in Summe über den Eingangsbrücken 20 der in Reihe geschalteten Submodule 5a-5c abfallen soll.

Das Stromregelmodul 42 hat im Vergleich zu dem Spannungsregelmodul 41 eine wesentlich geringere Ansprechzeit. Das Stromregelmodul 42 kann somit schnelle Stromschwankungen effektiv ausregeln, während das Spannungsregelmodul 41 zur Anpassung der durchschnittlichen Batteriestromstärke $I_B$ an den sich ändernden Leistungsbedarf des Motors 2 dient.

Zusätzlich zu der Stellgröße S sind dem Modulator 43 als weitere Eingangsgrößen die Messwerte der Zwischenkreisspannungen $U_{Z1}$-$U_{Z3}$ und die zugehörigen Spannungssollwerte $U_{Z10}$-$U_{Z30}$ sowie der Messwert der Batteriestromstärke $I_B$ zugeführt.

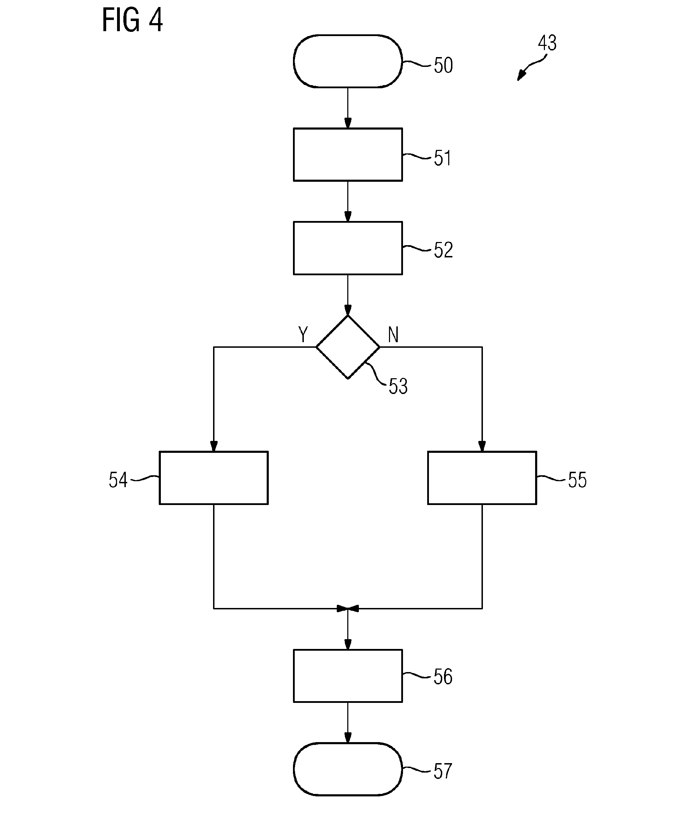

Nach Maßgabe dieser Eingangsgrößen erzeugt der Modulator 43 das jeweilige Eingangssteuersignal $E_1$-$E_3$ für die Eingangsbrücken 20 der Submodule 5a-5c gemäß einem in FIG 4 näher dargestellten Verfahren.

Danach berechnet der Modulator 43 in einem auf den Verfahrensstart 50 folgenden ersten Schritt 51 für jedes Submodul 5a-5c jeweils separat die Spannungsabweichung der jeweiligen Zwischenkreisspannung $U_{Z1}$-$U_{Z3}$ von dem zugeordneten Spannungssollwert $U_{Z10}$-$U_{Z30}$.

In einem folgenden Schritt 52 sortiert der Modulator 43 die Submodule 5a-5c nach der Größe der jeweils zugeordneten Spannungsabweichung.

In einem weiteren Schritt 53 prüft der Modulator 43, ob die Batteriestromstärke $I_B$ und somit die Stromflussrichtung im Batteriestromkreis 8 positiv sind ($I_B > 0$).

Gegebenenfalls (Y) wählt der Modulator 43 in einem Schritt 54 dasjenige Submodul 5a-5c mit der minimalen Spannungsabweichung (min{$U_{Z1}$-$U_{Z10}$; $U_{Z2}$-$U_{Z20}$;$U_{Z3}$$U_{Z30}$;}) sowie gegebenenfalls eines oder mehrere Submodule 5a-5c mit nächstgrößerer Spannungsabweichung aus und bestimmt für jedes ausgewählte Submodul 5a-5c einen zugeordneten Aussteuergrad für die getaktete Ansteuerung der Eingangsbrücke 20, so dass die Summe der Sollspannungen $U_{Z01}$-$U_{Z03}$ der ausgewählten Submodule 5a-5c im zeitlichen Mittelwert der Stellgröße S entspricht. Dabei ordnet der Modulator 43 dem Submodul 5a-5c mit der minimalen Spannungsabweichung einen größeren Aussteuergrad zu als gegebenenfalls weiteren ausgewählten Submodulen 5a-5c mit größerer Spannungsabweichung.

So ordnet der Modulator 43 dem Submodul 5a-5c mit der minimalen Spannungsabweichung einen Aussteuergrad zwischen 0 und 1 zu, wenn die Stellgröße S einer Spannung zwischen 0 und dem Spannungssollwert $U_{Z01}$-$U_{Z03}$ dieses Submodul 5a-5c entspricht, während es den übrigen Submodulen den Aussteuergrad 0 zuweist.

Wenn die Stellgröße S dagegen einer Spannung entspricht, die zwischen dem Spannungssollwert $U_{Z01}$-$U_{Z03}$ des Submoduls 5a-5c mit der minimalen Spannungsabweichung und der Summe der Spannungssollwerte $U_{Z01}$-$U_{Z03}$ dieses Submodul 5a-5c und des Submoduls mit der nächstgrößeren Spannungsabweichung liegt, ordnet der Modulator 43 dem Submodul 5a-5c mit der minimalen Spannungsabweichung den Aussteuergrad 1 und dem Submodul 5a-5c mit der nächstgrößeren Spannungsabweichung einen Aussteuergrad zwischen 0 und 1 zu. Das übrige Submodul 5a-5c wird dagegen mit dem Aussteuergrad 0 angesteuert.

Wenn die Stellgröße S schließlich einer Spannung entspricht, die zwischen der Summe der Spannungssollwerte $U_{Z01}$-$U_{Z03}$ des Submoduls 5a-5c mit minimaler Spannungsabweichung und dem Summenspannungssollwert $U_{S0}$ liegt, ordnet der Modulator 43 dem Submodul 5a-5c mit minimaler Spannungsabweichung und dem Submodul 5a-5c mit der nächstgrößeren Spannungsabweichung jeweils den Aussteuergrad 1 und dem Submodul 5a-5c mit der größten Spannungsabweichung einen Aussteuergrad zwischen 0 und 1 zu.

Sofern die in Schritt 53 geprüfte Bedingung negativ ausfällt (N) und somit eine negative Stromflussrichtung im Batteriestromkreis 8 vorherrscht ($I_B < 0$), wählt der Modulator 43 in einem Schritt 55 dasjenige Submodul 5a-5c mit der maximalen Spannungsabweichung ($\max\{U_{Z1}$-$U_{Z10}$; $U_{Z2}$-$U_{Z20}$; $U_{Z3}U_{Z30}$;\}$) sowie gegebenenfalls eines oder mehrere Submodule 5a-5c mit nächstkleinerer Spannungsabweichung aus und bestimmt für jedes ausgewählte Submodul 5a-5c einen zugordneten Aussteuergrad für die Ansteuerung der Eingangsbrücke 20, so dass die Summe der Sollspannungen $U_{Z01}$-$U_{Z03}$ der ausgewählten Submodule 5a-5c im zeitlichen Mittelwert der Stellgröße S entspricht. Dabei ordnet der Modulator 43 - umgekehrt analog zu dem Verfahrensschritt 54 - dem Submodul 5a-5c mit der maximalen Spannungsabweichung einen größeren Aussteuergrad zu als gegebenenfalls weiteren ausgewählten Submodulen 5a-5c mit kleinerer Spannungsabweichung.

In einem Schritt 56 erzeugt der Modulator 43 in dem folgenden Taktzyklus der Eingangssteuersignale $E_1$-$E_3$ jeweils einen Steuerpuls und eine darauffolgende Pulspause mit dem in Schritt 54 bzw. 55 bestimmten Aussteuergrad.

In einem exemplarischen Fall, in dem allen Submodulen 5a-5c der gemeinsame Spannungssollwert $U_{Z10} = U_{Z20} = U_{Z30} = 100V$ vorgegeben ist, und die Stellgröße S einer Spannung von 160 V entspricht, legt der Modulator 43 die Aussteuergrade der Submodule 5a-5c derart fest, dass im zeitlichen Mittel in jedem Taktzyklus 1,6 Submodule aufgeschaltet werden. Es sei angenommen, dass die Zwischenkreisspannungen $U_{Z1}$, $U_{Z2}$ und $U_{Z3}$ die Werte 93V, 88V bzw. 104V aufweisen, so dass das Submodul 5b die minimale Spannungsabweichung von $U_{Z2}$ - $U_{Z20}$ = -12V, das Submodul 5a die nächstgrößere Spannungsabweichung von $U_{Z1}$ - $U_{Z10}$ = -7V und das Submodul 5c die größte Spannungsabweichung von $U_{Z1}$ - $U_{Z10}$ = +4V aufweisen. In diesem Fall steuert der Modulator 43 bei positiver Stromrichtung ($I_B > 0$) gemäß Schritt 54 das Submodul 5b mit dem Aussteuergrad 1, das Submodul 5a mit dem Aussteuergrad 0,6 und das Submodul 5c mit dem Aussteuergrad 0 an. Bei negativer Stromrichtung ($I_B < 0$) würde der Modulator 43 dagegen gemäß Schritt 55 das Submodul 5c mit dem Aussteuergrad 1, das Submodul 5a mit dem Aussteuergrad 0,6 und das Submodul 5b mit dem Aussteuergrad 0 ansteuern.

Der Modulator 43 springt von dem auf Schritt 56 folgenden Verfahrensende 57 nach jedem Taktzyklus zurück auf den Verfahrensstart 50, so dass die Schritte 51 bis 56 zyklisch wiederholt werden. Somit werden durch den Modulator 43 für jeden Taktzyklus der Eingangssteuersignale $E_1$-$E_3$ die jeweils aufzuschaltenden Submodule 5a-5c erneut ausgewählt.

Durch das vorstehend beschriebene Verfahren wird erreicht, dass bei positiver Stromflussrichtung im Batteriestromkreis 8 stets zumindest dasjenige Submodul 5a-5c auf dem Batteriestromkreis 8 aufgeschaltet wird, dessen Zwischenkreiskapazität 22 den - zumindest relativ gesehen - niedrigsten Ladezustand aufweist, so dass diese Zwischenkreiskapazität 22 bevorzugt aus dem Batteriestromkreis 8 aufgeladen wird.

Umgekehrt wird durch den Modulator 43 bei einem negativen Stromfluss im Batteriestromkreis 8 stets zumindest dasjenige Submodul 5a-5c auf den Batteriestromkreis 8 aufgeschaltet, dessen Zwischenkreiskapazität 22 den - zumindest relativ gesehen - höchsten Ladezustand aufweist, so dass diese Zwischenkreiskapazität bevorzugt in den Batteriestromkreis 8 entladen wird.

Gleichzeitig wird von der Steuereinheit 6 durch die Einstellung des Aussteuergrades der Eingangssteuersignale $E_1$-$E_3$ die Batteriestromstärke $I_B$ unter Ausgleich von schnellen Stromschwankungen bedarfsgerecht angepasst.

Sofern der Spannungssollwert $U_{Z10}$-$U_{Z30}$ für alle Submodule 5a-5c gleich gewählt ist ($U_{Z10} = U_{Z20} = U_{Z30}$), kann die explizite Bestimmung der Spannungsabweichungen gemäß Schritt 51 optional entfallen. In diesem Fall werden Schritt 52 die Submodule 5a-5c unmittelbar nach dem Betrag der Zwischenkreisspannungen $U_{Z1}$-$U_{Z3}$ sortiert. In Schritt 54 wird dabei stets zumindest dasjenige Submodul 5a-5c mit der kleinsten Zwischenkreisspannung $U_{Z1}$-$U_{Z3}$ ausgewählt ($\min\{U_{Z1};U_{Z2};U_{Z3}\}$), während in Schritt 55 stets zumindest das Submodul 5a-5c mit der größten Zwischenkreisspannung $U_{Z1}$-$U_{Z3}$ ausgewählt wird ($\max\{U_{Z1};U_{Z2}; U_{Z3}\}$).

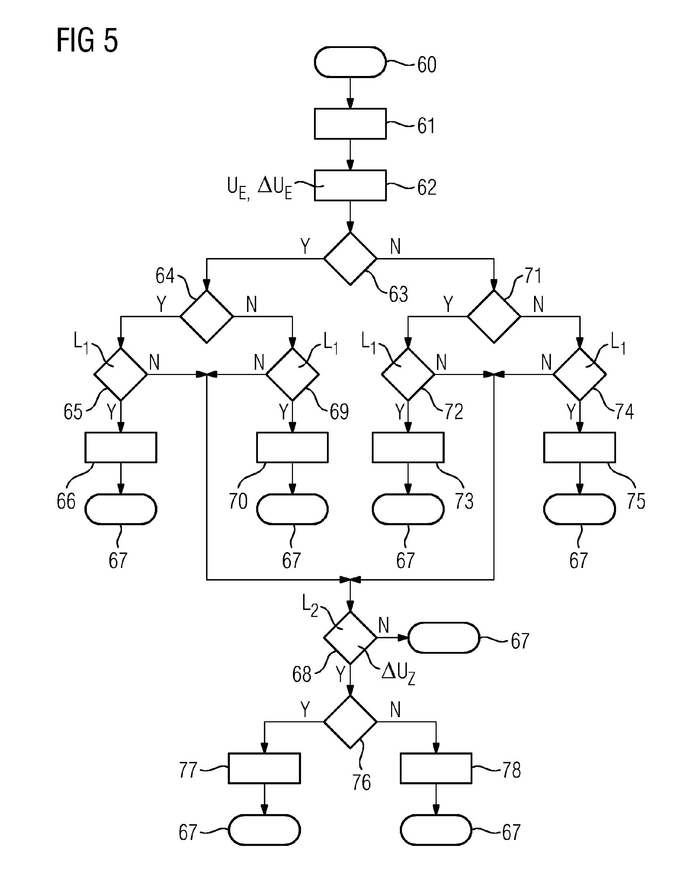

In einer alternativen Verfahrensvariante werden die auf den Batteriekreis 8 aufzuschaltenden Submodule 5a-5c durch den Modulator 43 nicht periodisch neu bestimmt, sondern nur dann, wenn ein entsprechender Bedarf festgestellt wird. Für die nähere Beschreibung dieser Verfahrensvariante, deren Ablauf in FIG 5 skizziert ist, wird im Folgenden - ohne Beschränkung der Allgemeinheit - vereinfachend davon ausgegangen, dass allen Submodulen 5a-5c der gleiche Spannungssollwert $U_{Z10}$-$U_{Z30}$ vorgegeben ist ($U_{Z10} = U_{Z20} = U_{Z30}$).

Nach dem Verfahrensstart 60 ordnet der Modulator 43 gemäß FIG 5 in einem ersten Schritt 61 die Submodule 5a-5c wiederum nach der Größe der jeweils zugeordneten Zwischenkreisspannung $U_{Z1}$-$U_{Z3}$.

In einem folgenden Schritt 62 berechnet der Modulator 43 die Spannung, die über den in Reihe geschalteten Eingangsbrücken 20 der Submodule 5a-5c in Summe tatsächlich abfällt. Diese - nachfolgend als Effektivspannung $U_E$ (FIG 1) bezeichnete - Spannung hängt von den Schaltzuständen der Halbleiterschalter 29 und 30 der Eingangsbrücken 20, und somit von dem Wert der Eingangssteuersignale $E_1$-$E_3$ ab, und ist konkret gegeben durch

$$U_E = E_1 \cdot U_{Z1} + E_2 \cdot U_{Z2} + E_3 \cdot U_{Z3}$$

Außerdem berechnet der Modulator 43 die Abweichung der Effektivspannung $U_E$ von der Stellgröße S, die den zugehörigen Sollwert darstellt. Diese Abweichung ist nachfolgend als (Effektiv-)Spannungsabweichung $\Delta U_E$ (mit $\Delta U_E = S - U_E$) bezeichnet.

In einem weiteren Schritt 63 prüft der Modulator 43, ob die Spannungsabweichung $\Delta U_E$ positiv ist ($\Delta U_E > 0$), ob also die Effektivspannung $U_E$ den Stellwert S unterschreitet ($U_E < S$).

Gegebenenfalls (Y) prüft der Modulator 43 in einem Schritt 64, ob die Batteriestromstärke $I_B$ und somit die Stromflussrichtung im Batteriestromkreis 8 positiv sind ($I_B > 0$).

Gegebenenfalls (Y) wählt der Modulator 43 in einem Schritt 65 aus den abgeschalteten Submodulen 5a-5c dasjenige Submodul 5a-5c mit der kleinsten Zwischenkreisspannung $U_{Z1}$-$U_{Z3}$ aus. Weiterhin prüft der Modulator 43, ob der Absolutbetrag der Spannungsabweichung $\Delta U_E$ einen ersten Schaltwert $L_1$ überschreitet ($|AU_E| > L_1$), der hier mit dem halben Betrag der Zwischenkreisspannung $U_{Z1}$-$U_{Z3}$ dieses ausgewählten Submoduls 5a-5c gleichgesetzt wird ($L_1 = \min\{ U_{Zj}$ mit $j \in 1,2,3$ und $Ej = 0\}/2$).

Sofern diese Bedingung erfüllt ist (Y), schaltet der Modulator 43 in einem Schritt 66 dieses ausgewählte Submodul 5a-5c auf und springt zu dem Verfahrensende 67. Andernfalls (N) springt der Modulator 43 zu einem Schritt 68.

Unter den Bedingungen $\Delta U_E > 0$ ($U_E < S$) und $I_B > 0$ schaltet der Modulator 43 in Schritt 66 mit anderen Worten das (bisher abgeschaltete) Submodul 5a-5c mit der kleinsten Zwischenkreisspannung $U_{Z1}$-$U_{Z3}$ auf, wenn der Absolutbetrag der Spannungsabweichung $\Delta U_E$ die halbe Zwischenkreisspannung $U_{Z1}$-$U_{Z3}$ dieses Submoduls 5a-5c übersteigt.

Sofern die Batteriestromstärke $I_B$ und somit die Stromflussrichtung im Batteriestromkreis 8 negativ sind ($I_B < 0$), und die in Schritt 64 vorgenommene Prüfung somit negativ ausfällt (N), wählt der Modulator 43 in einem Schritt 69 aus den abgeschalteten Submodulen 5a-5c dasjenige Submodul 5a-5c mit der größten Zwischenkreisspannung $U_{Z1}$-$U_{Z3}$ aus. Wiederum prüft der Modulator 43, ob der Absolutbetrag der Spannungsabweichung $\Delta U_E$ den Schaltwert $L_1$ überschreitet ($|\Delta U_E| > L_1$), der wiederum mit dem halben Betrag der Zwischenkreisspannung $U_{Z1}$-$U_{Z3}$ dieses ausgewählten Submoduls 5a-5c gleichgesetzt wird ($L_1 = \max\{ U_{Zj}$ mit $j \in 1, 2, 3$ und $Ej = 0\}/2$).

Sofern diese Bedingung erfüllt ist (Y), schaltet der Modulator 43 in einem Schritt 70 dieses ausgewählte Submodul 5a-5c auf und springt zu dem Verfahrensende 67. Andernfalls (N) springt der Modulator 43 zu dem Schritt 68.

Unter den Bedingungen $\Delta U_E > 0$ ($U_E < S$) und $I_B < 0$ schaltet der Modulator 43 in Schritt 70 mit anderen Worten das (bisher abgeschaltete) Submodul 5a-5c mit der größten Zwischenkreisspannung $U_{Z1}$-$U_{Z3}$ auf, wenn der Absolutbetrag der Spannungsabweichung $\Delta U_E$ die halbe Zwischenkreisspannung $U_{Z1}$-$U_{Z3}$ dieses Submoduls 5a-5c übersteigt.

Sofern die Spannungsabweichung $\Delta U_E$ negativ ist ($\Delta U_E < 0$) und somit bereits die in Schritt 63 vorgenommene Prüfung negativ ausfällt (N), prüft der Modulator 43 in einem Schritt 71 wiederum, ob die Batteriestromstärke $I_B$ und somit die Stromflussrichtung im Batteriestromkreis 8 positiv sind ($I_B > 0$).

Gegebenenfalls (Y) wählt der Modulator 43 in einem Schritt 72 aus den aufgeschalteten Submodulen 5a-5c dasjenige Submodul 5a-5c mit der größten Zwischenkreisspannung $U_{Z1}$-$U_{Z3}$ aus. Weiterhin prüft der Modulator 43, ob der Absolutbetrag der Spannungsabweichung $\Delta U_E$ den Schaltwert $L_1$ überschreitet ($|\Delta U_E| > L_1$), der wiederum mit dem halben Betrag der Zwischenkreisspannung $U_{Z1}$-$U_{Z3}$ dieses ausgewählten Submoduls 5a-5c gleichgesetzt wird ($L_1 = \max\{ U_{Zj}$ mit $j \in 1,2,3$ und $E_j = 1\}/2$).

Sofern diese Bedingung erfüllt ist (Y), schaltet der Modulator 43 in einem Schritt 73 dieses ausgewählte Submodul 5a-5c ab und springt zu dem Verfahrensende 67. Andernfalls (N) springt der Modulator 43 zu einem Schritt 68.

Unter den Bedingungen $\Delta U_E < 0$ ($U_E > S$) und $I_B > 0$ schaltet der Modulator 43 in Schritt 73 mit anderen Worten das (bisher aufgeschaltete) Submodul 5a-5c mit der größten Zwischenkreisspannung $U_{Z1}$-$U_{Z3}$ ab, wenn der Absolutbetrag der Spannungsabweichung $\Delta U_E$ die halbe Zwischenkreisspannung $U_{Z1}$-$U_{Z3}$ dieses Submoduls 5a-5c übersteigt.

Sofern die Batteriestromstärke $I_B$ und somit die Stromflussrichtung im Batteriestromkreis 8 negativ sind ($I_B < 0$), und die in Schritt 71 vorgenommene Prüfung somit negativ ausfällt (N), wählt der Modulator 43 in einem Schritt 74 aus den aufgeschalteten Submodulen 5a-5c dasjenige Submodul 5a-5c mit der kleinsten Zwischenkreisspannung $U_{Z1}$-$U_{Z3}$ aus. Wiederum prüft der Modulator 43, ob der Absolutbetrag der Spannungsabweichung $\Delta U_E$ den Schaltwert $L_1$ überschreitet ($|\Delta U_E| > L_1$), der wiederum mit dem halben Betrag der Zwischenkreisspannung $U_{Z1}$-$U_{Z3}$ dieses ausgewählten Submoduls 5a-5c gleichgesetzt wird ($L_1 = \min \{ U_{Zj}$ mit $j \in 1, 2, 3$ und $Ej = 1\}/2$).

Sofern diese Bedingung erfüllt ist (Y), schaltet der Modulator 43 in einem Schritt 75 dieses ausgewählte Submodul 5a-5c ab und springt zum Verfahrensende 67. Andernfalls (N) springt der Modulator 43 zu dem Schritt 68.

Unter den Bedingungen $\Delta U_E < 0$ ($U_E > S$) und $I_B < 0$ schaltet der Modulator 43 in Schritt 75 mit anderen Worten das (bisher aufgeschaltete) Submodul 5a-5c mit der kleinsten Zwischenkreisspannung $U_{Z1}$-$U_{Z3}$ ab, wenn der Absolutbetrag der Spannungsabweichung $\Delta U_E$ die halbe Zwischenkreisspannung $U_{Z1}$-$U_{Z3}$ dieses Submoduls 5a-5c übersteigt.

Sofern andernfalls in einem der Schritte 65, 69, 72 oder 74 festgestellt wird, dass der erste Schaltwert $L_1$ nicht überschritten ist (N), so bestimmt der Modulator 43 in dem Schritt 68 die Abweichung $\Delta U_Z$ der Zwischenkreisspannungen $U_{Z1}$-$U_{Z3}$ aller Submodule 5a-5c ($\Delta U_Z$ = max {$U_{Z1}$; $U_{Z2}$; $U_{Z3}$} - min {$U_{Z1}$; $U_{Z2}$; $U_{Z3}$}) und prüft, ob diese Abweichung $\Delta U_Z$ einen vorgegebenen zweiten Schaltwert $L_2$ überschreitet ($\Delta U_Z > L_2$).

Sofern diese Bedingung nicht erfüllt ist (N), springt der Modulator 43 zum Verfahrensende 67.

Andernfalls (Y) tauscht der Modulator eines der aufgeschalteten Submodulen 5a-5c gegen eines der abgeschalteten Submodulen 5a-5c aus. Hierzu prüft der Modulator 43 in einem Schritt 76 zunächst erneut, ob die Batteriestromstärke $I_B$ und somit die Stromflussrichtung im Batteriestromkreis 8 positiv sind ($I_B > 0$).

Gegebenenfalls (Y) schaltet der Modulator 43 in einem Schritt 77 das (bisher aufgeschaltete) Submodul 5a-5c mit der größten Zwischenkreisspannung $U_{Z1}$-$U_{Z3}$ ab und das (bisher abgeschaltete) Submodul 5a-5c mit der kleinsten Zwischenkreisspannung $U_{Z1}$-$U_{Z3}$ auf und springt zum Verfahrensende 67.

Andernfalls (N) schaltet der Modulator 43 in einem Schritt 78 das (bisher aufgeschaltete) Submodul 5a-5c mit der kleinsten Zwischenkreisspannung $U_{Z1}$-$U_{Z3}$ ab und das (bisher abgeschaltete) Submodul 5a-5c mit der größten Zwischenkreisspannung $U_{Z1}$-$U_{Z3}$ auf und springt ebenfalls zum Verfahrensende 67.

Das Verfahren gemäß FIG 5 wird von dem Modulator 43 fortlaufend wiederholt. Im Zuge der in dem Schritten 63 bis 75 vorgenommenen Fallunterscheidung schaltet der Modulator 43 dabei immer dann Submodule 5a-5b auf oder ab, wenn sich hierdurch die Effektivspannung $U_E$ besser mit der Stellgröße S in Übereinstimmung bringen lässt, wobei er das auf- bzw. abzuschaltenden Submodul 5a-5c derart auswählt, dass die Zwischenkreisspannungen $U_{Z1}$-$U_{Z3}$ bestmöglich aneinander angeglichen werden. Ebenso wechselt der Modulator 43 im Zuge der in den Schritten 68 und 76 bis 78 vorgenommenen Fallunterscheidung derart zwischen den Submodulen 5a-5c, dass die Zwischenkreisspannungen $U_{Z1}$-$U_{Z3}$ bestmöglich aneinander angeglichen werden. Anders als bei der Verfahrensvariante gemäß FIG 4 schaltet der Modulator 43 im Verfahren gemäß FIG 5 die Submodule 5a-5c nicht in einem periodischen Taktzyklus auf oder ab, sondern nur bei Bedarf - mithin dann, wenn in einem der Schritte 65, 69, 72, 74 oder 68 die Überschreitung des jeweiligen Schaltwerts $L_1$ oder $L_2$ festgestellt wird.

Die Steuereinheit 6 ist in bevorzugter Ausbildung durch einen Mikrocontroller gebildet, in dem die Funktionalität zur Durchführung des vorstehend anhand der FIG 3 bis 5 beschriebenen Regelungsverfahrens softwaretechnisch implementiert ist. Somit sind insbesondere auch das Spannungsregelmodul 41, das Stromregelmodul 42 und der Modulator 43 durch Softwarebausteine gebildet, die die Hardware des Mikrocontrollers zur Erzeugung der Eingangssteuersignale $E_1$-$E_3$ nutzen.

Obwohl die Erfindung anhand der vorstehend beschriebenen Ausführungsbeispiele besonders deutlich wird, ist sie auf diese nicht beschränkt. Vielmehr können weitere Ausführungsformen der Erfindung aus der vorliegenden Beschreibung abgeleitet werden.

Insbesondere kann der Umrichter 3 mehr (oder weniger) als die drei Submodule 5a-5c umfassen. So kann der Umrichter 3 insbesondere zur Versorgung mehrerer unabhängiger Lasten eingesetzt werden. Beispielsweise treibt der Umrichter 3 vier Elektromotoren, von denen jeweils einer einem Rad des Fahrzeugs zugeordnet ist. In diesem Fall umfasst der Umrichter 3 beispielsweise für jede Phasenwicklung eines jeden Elektromotors jeweils ein Submodul.

**Patentansprüche**

1. Verfahren zum Betrieb eines modularen Hochfrequenz-Umrichters (3), der mehrere Submodule (5a-5c) umfasst, die eingangsseitig in Reihe über eine Induktivität (7) in einen aus einer Gleichspannungsquelle (4) gespeisten Versorgungsstromkreis (8) geschaltet sind,

   - wobei jedes Submodul (5a-5c) eingangsseitig eine Halbbrücke (20) und ausgangsseitig eine mindestens einphasige Vollbrücke (21) aufweist, und
   - wobei die Halbbrücke (20) und die Vollbrücke (21) in jedem Submodul (5a-5c) jeweils zusammen mit einer Zwischenkreiskapazität (22) in einem Gleichspannungs-Zwischenkreis (25) parallelgeschaltet sind,
   wobei verfahrensgemäß die Submodule (5a-5c) im Wechsel auf den Versorgungsstromkreis (8) aufgeschaltet werden, indem die Zwischenkreiskapazität (22) des jeweils aufgeschalteten Submoduls (5a-5c) mittels der eingangsseitigen Halbbrücke (20) in den Versorgungsstromkreis (8) geschaltet wird, **dadurch gekennzeichnet,**
   - **dass** die über der jeweiligen Zwischenkreiskapazität (22) eines jeden Submoduls (5a-5c) abfallende Zwischenkreisspannung ($U_{Z1}$-$U_{Z3}$) gemessen wird,
   - **dass** das oder jedes aufzuschaltende Submodul (5a-5c) nach Maßgabe der Spannungsabweichung der zugehörigen Zwischenkreisspannung ($U_{Z1}$-$U_{Z3}$) von einem vorgegebenen Spannungssollwert ($U_{Z10}$-$U_{Z30}$) ausgewählt wird.

2. Verfahren nach Anspruch 1, **dadurch gekennzeichnet , dass** zumindest dasjenige Submodul (5a-5c) mit der maximalen oder minimalen Spannungsabweichung auf den Versorgungsstromkreis (8) aufgeschaltet wird.

3. Verfahren nach Anspruch 2, **dadurch gekennzeichnet ,**

   - **dass** die Stromrichtung des in dem Versorgungsstromkreis (8) fließenden Stroms ($I_B$) bestimmt wird, und

- **dass** stets zumindest dasjenige Submodul (5a-5c) mit der minimalen Spannungsabweichung auf den Versorgungsstromkreis (8) aufgeschaltet wird, wenn die Stromrichtung positiv ist, und
- **dass** stets zumindest dasjenige Submodul (5a-5c) mit der maximalen Spannungsabweichung auf den Versorgungsstromkreis (8) aufgeschaltet wird, wenn die Stromrichtung negativ ist.

4. Verfahren nach einem der Ansprüche 1 bis 3, **dadurch gekennzeichnet,**
   **dass** die eingangsseitige Halbbrücke (20) des oder jedes aufgeschalteten Submoduls (5a-5c) mittels eines Eingangssteuersignals ($E_1$-$E_3$) getaktet angesteuert wird.

5. Verfahren nach einem der Ansprüche 1 bis 4, **dadurch gekennzeichnet,**

   - **dass** die durch die Summe der Zwischenkreisspannungen ($U_{Z1}$-$U_{Z3}$) aller Submodule (5a-5c) gebildete Summenspannung ($U_S$) bestimmt wird, und
   - **dass** nach Maßgabe der Abweichung ($\Delta U_S$) der Summenspannung ($U_S$) von der Summe der Spannungssollwerte ($U_{Z10}$-$U_{Z30}$) ein Stromsollwert ($I_{B0}$) für den durch den Versorgungsstromkreis (8) fließenden Strom bestimmt wird, und
   - **dass** durch Auf- und Abschalten von Submodulen (5a-5c) der durch den Versorgungsstromkreis (8) fließende Strom auf den Stromsollwert ($I_B$) geregelt wird.

6. Verfahren nach Anspruch 4 oder 5, **dadurch gekennzeichnet, dass** für jeden Taktzyklus des Eingangssteuersignals ($E_1$-$E_3$) das oder jedes aufzuschaltende Submodul (5a-5c) neu ausgewählt wird.

7. Verfahren nach einem der Ansprüche 1 bis 6, **dadurch gekennzeichnet,**

   - **dass** die durch die Summe der Zwischenkreisspannungen ($U_{Z1}$-$U_{Z3}$) aller aufgeschalteten Submodule (5a-5c) gebildete Effektivspannung ($U_E$) bestimmt wird, und
   - **dass** das aufzuschaltende Submodul (5a-5c) gewechselt wird, wenn die Effektivspannung ($U_E$) von einem vorgegebenen Sollwert (S) um mehr als einen vorgegebenen Schaltwert ($L_1$, $L_2$) abweicht.

8. Verfahren nach Anspruch 7, **dadurch gekennzeichnet , dass** der Schaltwert ($L_1$) auf die Hälfte der Zwischenkreisspannung des ausgewählten Submoduls (5a-5c) festgelegt wird.

9. Modularer Hochfrequenz-Umrichter (3)

   - mit mehreren Submodulen (5a-5c), die eingangsseitig in Reihe über eine Induktivität (7) in einen Gleichspannung ($U_B$) führenden Versorgungsstromkreis (8) geschaltet sind,
   - wobei jedes Submodul (5a-5c) eingangsseitig eine Halbbrücke (20) und ausgangsseitig eine mindestens einphasige Vollbrücke (21) aufweist, und
   - wobei die Halbbrücke (20) und die Vollbrücke (21) in jedem Submodul (5a-5c) jeweils zusammen mit einer Zwischenkreiskapazität (22) parallel zueinander in einen Gleichspannungs-Zwischenkreis (25) geschaltet sind, sowie
   - mit einer Steuereinrichtung (6) zur Ansteuerung der eingangsseitigen Halbbrücken (20) der Submodule (5a-5c), wobei die Steuereinrichtung (6) zur Durchführung des Verfahrens nach einem der Ansprüche 1 bis 8 eingerichtet ist.

# FIG 1

## FIG 2

$U_{Z1} - U_{Z3}$

$U_{E1} - U_{E3}$

FIG 3

FIG 4

FIG 5

**EUROPÄISCHER RECHERCHENBERICHT**

Nummer der Anmeldung

EP 13 15 3502

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LAMBERTZ L ET AL: "Modular converter systems for vehicle applications", EMOBILITY - ELECTRICAL POWER TRAIN, 2010, IEEE, PISCATAWAY, NJ, USA, 8. November 2010 (2010-11-08), Seiten 1-6, XP031835669, ISBN: 978-1-4244-8410-2 | 1,2,9 | INV. B60L7/10 H02M7/66 H02M7/797 |
| Y | * das ganze Dokument * ----- | 3-8 | |
| A | DE 102 37 553 A1 (SIEMENS AG [DE]) 4. März 2004 (2004-03-04) * das ganze Dokument * ----- | 1-9 | |
| Y | DANIEL SIEMASZKO ET AL: "Evaluation of control and modulation methods for modular multilevel converters", THE 2010 INTERNATIONAL POWER ELECTRONICS CONFERENCE, ECCE ASIA -, 1. Juni 2010 (2010-06-01), Seiten 746-753, XP055066778, DOI: 10.1109/IPEC.2010.5544609 ISBN: 978-1-42-445394-8 * das ganze Dokument * ----- | 3-8 | |

RECHERCHIERTE SACHGEBIETE (IPC)

B60L
H02M

Der vorliegende Recherchenbericht wurde für alle Patentansprüche erstellt

| Recherchenort | Abschlußdatum der Recherche | Prüfer |
|---|---|---|
| Den Haag | 17. Juni 2013 | Mapp, Graham |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 3502

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2013

| Im Recherchenbericht angeführtes Patentdokument | Datum der Veröffentlichung | Mitglied(er) der Patentfamilie | Datum der Veröffentlichung |
|---|---|---|---|
| DE 10237553 A1 | 04-03-2004 | KEINE | |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

• **LUKAS LAMBERTZ et al.** Modularer Hochfrequenz Umrichter für Fahrzeugantriebe. *EMA 2010,* 08. September 2010